# EUROPEAN PATENT SPECIFICATION

(11) **EP 2 413 712 B1**
(45) Date of publication and mention of the grant of the patent: **27.05.2015**
(21) Application number: 10714047.7
(22) Date of filing: 30.03.2010
(51) Int. Cl.: A23G 1/54, A23G 1/52, A23G 1/44, A23G 3/54, A23G 3/52, A23G 3/40, A23L 1/307, A23L 1/035, A23G 1/36

(54) **CONFECTIONERY PRODUCT**
KONFEKT
PRODUIT DE PÂTISSERIE

(30) Priority: 01.04.2009 GB 0905672
(43) Date of publication of application: 08.02.2012
(73) Proprietor: Mondelez UK Holdings & Services Limited, Uxbridge, Middlesex UB8 1DH (GB)
(72) Inventor: ESTEVE, Emilien, Louis, Joseph, CH-1446 Baulmes (CH); HOPE, Abigail, Reading RG6 5JH (GB)
(74) Representative: Ward, David Ian
(86) International application number: PCT/GB2010/000615
(87) International publication number: WO 2010/112835

(56) References cited:
- EP-A1- 0 500 182
- EP-A1- 0 627 170
- EP-A1- 1 728 440
- WO-A1-00/64268
- WO-A1-2007/071405
- US-A1- 2006 233 933

## Description

The present invention relates to aerated emulsions. Such emulsions may find use in confectionery compositions, such as for example as fillings.

There is a general desire in food industries, and particularly in the confectionery industry, to enable consumers to address the health problems associated with high-calorie, and particularly high-fat, diets. This desire has led to the introduction of a number of food products in which the calorific content and/or fat content has been reduced. Typically, these food products involve the replacement of sugars with low-calorie sweeteners, and/or the replacement of fats with non-fats.

These developments present particular challenges for the confectionery industry, and especially for the chocolate industry. Chocolate consists largely of cocoa (and, in the case of milk chocolate, milk) fats and sugar, and derives its consumer appeal to some extent from the particular physical and organoleptic properties of this combination.

One technique known in the art is the incorporation of a trapped gas inside a chocolate composition (known as aerated chocolate). An example is the chocolate bar sold in the UK as WISPA®, which comprises a centre of aerated chocolate surrounded by a solid chocolate coating. The incorporation of trapped gas increases the volume of the chocolate without any corresponding increase in calorific or fat content. The composition will therefore contain less chocolate than a similarly-sized, non-aerated composition, and so will have a lower fat and calorific content, whilst maintaining the visual appeal to the consumer of a full-sized chocolate bar. Through appropriate choice of bubble size, the aeration can even provide additional benefits of a texture even more pleasing to the consumer than the non-aerated chocolate. This is in contrast to the perceived negative qualities of chocolate made with reduced quantities of fat, or with reduced-calorie sweeteners.

However, there is a limit to the amount of gas that can be incorporated into chocolate without significantly altering the consumers perception of value and enjoyment. As a result, there is a limit to the reductions in calorific value and fat content that can be obtained by aeration alone.

There therefore remains a desire for confectionery compositions, and particularly those similar to chocolate in taste and/or texture, having reduced calorific and/or fat content. According to a first aspect of the invention, there is provided an edible aerated water-in-oil emulsion comprising a fat phase; an emulsifier; and an aqueous phase, wherein the aqueous phase comprises entrapped gas and the entrapped gas forms at least 20% v/v of the aerated emulsion.

Documents EP 1 728 440 A1, EP 0 627 170 A1, EP 0 500 182 A1 and WO 00/64268 disclose aerated W/O emulsions, suitable for use in confectionery products.

Even without aeration, water-in-oil emulsions offer advantages in terms of fat- and calorie-content reduction when compared to the corresponding fat phase alone. Since the fat phase forms the continuous phase of the emulsion, the organoleptic properties (and particularly the initial response when the composition is placed in the mouth) are dominated by those of the fat phase, so that the emulsion produces a response similar to that from the fat phase alone. The presence of the aqueous phase in the emulsion serves to increase the bulk of the fat phase without any corresponding increase in fat content. The inventors have surprisingly found that these emulsions can be aerated to further increase these advantages, by further increasing bulk without increasing calorific content.

As used herein, 'aerated' (in connection with the emulsions of the invention) is intended to mean that the emulsion comprises entrapped gas. The gas may be any non-toxic gas suitable for use in food, such as for example air, nitrogen, nitrous oxide, carbon dioxide, etc.

In some embodiments, the entrapped gas forms at least 30%, at least 40% or at least 50% v/v of the aerated emulsion. It will be understood that increasing levels of aeration provide the emulsion with lighter textures and give the consumer greater awareness of the presence of gas bubbles in the emulsion. Correspondingly, higher levels of aeration are more difficult to achieve in stable form. It has been surprisingly found by the present inventors that levels of 50% v/v and greater can be achieved with the present emulsions.

Incorporation of entrapped gas can also be expressed in terms of density. In some embodiments, the aerated emulsion has a density of from 0.9 g/cm³ to 1.5 g/cm³. In some further embodiments, the aerated emulsion has a density of from 1.1 g/cm³ to 1.3 g/cm³.

The entrapped gas is contained within the aqueous phase, so that the walls of the gas bubbles are formed by the aqueous phase material. The discrete aqueous phase regions, containing the entrapped gas bubbles, are then located in the continuous fat phase.

Additionally, the entrapped gas may be located in the continuous fat phase, so that the walls of the gas bubbles are formed by the fat phase material and/or the discrete aqueous phase regions.

In some embodiments, the fat phase comprises a first fat having a first melting point, and a second fat having a second melting point lower than the first melting point. The inventors have surprisingly found that the combination of fats with different melting points assists in the formation of an emulsion having high levels of aeration. If aeration takes place at a temperature between the first and second melting points, the solidified first fat is able to provide structure to the emulsion, preventing the escape of entrapped gas, whilst the liquid second fat allows the structure to change shape as additional gas bubbles are incorporated.

In some embodiments, the first fat can exist in more than one crystal form, and is present in the emulsion in substantially a single crystal form.

In some embodiments, the first (crystalline) fat may be cocoa butter (which can exist in at least six different crystal forms), and in particular the single crystal form may be the Form V (or β2) crystal form. In some embodiments, the second fat may be non-crystalline, or may exist in the solid state in only a single crystal form. In some embodiments, the second fat is palm oil.

In some embodiments, the first melting point is greater than 18 °C.

In some embodiments, the first fat is a tempering fat. Examples of tempering fats include cocoa butter and cocoa butter equivalents. Typically, cocoa butter equivalents are blends of vegetable fat such as palm oil mid-fraction, illipe butter, shea stearine and cocoa butter. Sal, mango, and/or kolum fats may also be used. One example of a cocoa butter equivalent is COBERINE (TM), available from Loders Croklaan B.V., Wormerveer, The Netherlands.

In some embodiments, the second fat is a non-tempering fat. Examples of non-tempering fats include palm oil, palm kernel oil, butterfat, cocoa butter replacers and cocoa butter substitutes. Typically, cocoa butter replacers are hydrogenated, fractionated fat blends from soybean oil, rapeseed oil, palm oil, cottonseed oil, and/or sunflower oil, or other similar fats. Typically, cocoa butter substitutes are high lauric acid-containing fats, such as hydrogenated, fractionated fat blends from coconut and/or palm kernel oil, or other similar fats.

In some embodiments, the ratio of the first fat to the second fat is between 3:1 and 1:3. In some further embodiments, the ratio is between 2:1 and 1:2.

In some embodiments, the emulsifier has an HLB (hydrophilic-lipophilic balance) value of less than 8. In some further embodiments, the emulsifier has an HLB value between 2 and 7, or an HLB value between 4 and 6.

Suitable emulsifiers include monoglycerides, lactylated monoglycerides, succinylated monoglycerides, polyglycerol esters (including PGPR), sucrose esters, sorbitan esters and citric acid esters.

In some embodiments, the emulsion comprises more than one emulsifier, and each emulsifier has an HLB value of less than 8, or between 2 and 7, or between 4 and 6. In some embodiments, the emulsion comprises more than one emulsifier, and the mean HLB value of the emulsifier mixture is less than 8, or between 2 and 7, or between 4 and 6.

In some embodiments, the emulsifier comprises polyglycerol polyricinoleate (PGPR). In some embodiments, the emulsion comprises a blend of PGPR and distilled monoglycerides as emulsifiers. In some embodiments, the emulsion comprises a 50:50 blend of PGPR and distilled monoglycerides.

In some embodiments, the fat phase forms less than 30% of the emulsion. In some embodiments, the fat phase forms at least 5% of the emulsion. In such embodiments with relatively low fat contents, the majority of the emulsion may be formed by the aqueous phase. In some embodiments, the aqueous phase may comprise a bulk sweetener. Examples of bulk sweeteners include sugars and sugar-free bulk sweeteners, such as for example polyols. In some embodiments, the bulk sweetener may comprise glucose syrup. Examples of glucose syrup include glucose syrup 63DE, corn syrup, high fructose corn syrup (HFCS), high maltose corn syrup and mixtures thereof. In particular, the aqueous phase may consist of glucose syrup, optionally together with flavourings and/or colourings.

In some embodiments, the aqueous phase comprises a gelling agent. Suitable gelling agents include gelatin, carrageenan, egg albumen, pectin, and proteinaceous whipping agents such as HYFOAMA(TM) (commercially available from Kerry Group plc, Prince's Street, Tralee, Co. Kerry, Ireland).

In some embodiments, at least one of the fat phase and the aqueous phase further comprises a flavouring. In further embodiments, the confectionery emulsion further comprises a first flavouring in the fat phase and a second flavouring in the aqueous phase. In some embodiments, the first flavouring and the second flavouring provide different flavours.

In some embodiments, the emulsion further comprises at least one powdered component. Examples of suitable powdered components include cocoa powder and icing sugar. In some embodiments, the powdered component forms at least 1 % by mass of the emulsion. In further embodiments, the powdered component forms between 2 and 6%, or between 3 and 5% by mass of the emulsion.

In some embodiments, the emulsion is sugar-free.

In some embodiments, the emulsion is a confectionery emulsion.

According to a second aspect of the invention, there is provided a confectionery composition comprising the emulsion of the first aspect of the invention.

In some embodiments, the confectionery composition comprises a filling and a shell or coating at least partially enclosing the filling; wherein the filling comprises the emulsion of the first aspect of the invention. In some embodiments, the shell or coating material comprises chocolate.

In some embodiments, the confectionery composition is a chocolate bar. Typically, chocolate bars are individually-wrapped confections, of the order of 20g or greater in weight, which may contain other ingredients such as for example biscuit, caramel, honeycomb, cinder toffee, dried fruit, nougat, marshmallow, etc.

In some embodiments, the confectionery composition is a bite-size confection. Typically, bite-size confections are of the order of less than 20g in size, and may be individually wrapped, packaged together with other similar confections in a box or carton, and/or arranged in a display box or tray.

In some embodiments, the confectionery composition is a confectionery spread. Typically, confectionery spreads are packaged in a glass or plastic jar, and are intended for spreading on toast or baked products (such as cakes) or the like, or for use as an ingredient in cooking.

A reference method for making an emulsion, comprises providing a first component for forming the fat phase of an emulsion; providing a second component for forming the aqueous phase of an emulsion; mixing the first component and second component to form a water-in-oil emulsion; and aerating the water-in-oil emulsion.

It will be understood that, for emulsions made according to thethe reference method, the gas bubbles introduced by aeration will generally be located in the fat phase of the emulsion. The walls of the gas bubbles will therefore be formed from fat phase material and/or discrete regions of aqueous phase material.

In some embodiments, aerating the water-in-oil emulsion comprises whipping the water-in-oil emulsion. For example, the emulsion may be whipped in a planetary-action mixer fitted with a whipping head. Suitable planetary-action mixers are available from Hobart UK, 51 The Bourne, Southgate, London N14 6RT, UK. Other mixing techniques will be readily apparent to the skilled man.

In some embodiments, aerating the water-in-oil emulsion comprises introducing gas into the emulsion under pressure, and reducing the pressure to cause gas bubbles trapped in the emulsion to expand. In particular, reducing the pressure may comprise allowing the pressure to equilibrate to atmospheric pressure. In some embodiments, the gas may be dissolved in the emulsion under pressure, such that the initial reduction in pressure causes gas bubbles to form within the emulsion. Further reduction in pressure causes these gas bubbles to expand. For example, the introduction of a gas under pressure may be carried out in a dedicated aeration device. Suitable aeration devices are available from Aasted Mikroverk ApS, Bygmarken 9-17, DK-3520 Farum, Denmark.

In some embodiments, the first component comprises a first fat having a first melting point, and a second fat having a second melting point lower than the first melting point; providing the first component comprises providing the first component at a temperature greater than the first melting point; and the method further comprises cooling the emulsion to a temperature less than the first melting point but greater than the second melting point, prior to completion of aeration of the emulsion. It will be understood that at least some aeration of the emulsion therefore takes place at a temperature below the first melting point, so that at least some of the first fat is solid during aeration. The inventors have surprisingly found that this fat composition and choice of temperature allows convenient formation of a stable aerated water-in-oil emulsion, even with relatively high aqueous phase content and/or aeration levels. Without wishing to be bound by theory, it is believed that the presence of solidified first fat provides structure to the emulsion and particularly to the air bubbles, whilst the presence of liquid second fat enables the structure to move to accommodate the air bubbles as they are formed.

In some embodiments, the method further comprises adding a powdered component to the emulsion. Examples of suitable powdered components include icing sugar and cocoa powder. In some embodiments, the powdered component is added to the emulsion before aeration. Alternatively or additionally, the powdered component may be added to the emulsion after aeration.

In some embodiments, the method further comprises aerating the second component prior to formation of the emulsion.

According to a third aspect of the invention, there is provided a method for making an emulsion according to a first aspect of the invention, comprising providing a first component for forming the fat phase of an emulsion; providing a second component for forming the aqueous phase of an emulsion; aerating the second component; and mixing the first component and the aerated second component to form a water-in-oil emulsion.

It will be understood that, for emulsions made according to the third aspect of the invention, the gas bubbles introduced by aeration will generally be located in the aqueous phase of the emulsion. The walls of the gas bubbles will therefore be formed from aqueous phase material.

In some embodiments, the first component comprises a first fat having a first melting point, and a second fat having a second melting point lower than the first melting point; providing the first component comprises providing the first component at a temperature greater than the first melting point; and the method further comprises cooling the mixture of the first and second components to a temperature less than the first melting point but greater than the second melting point, before completion of mixing the first and second components to form the emulsion. It will be understood that this cooling causes at least some of the first fat to solidify. The inventors have surprisingly found that this fat composition and choice of temperature allows convenient formation of a stable water-in-oil emulsion containing an aerated aqueous phase. Without wishing to be bound by theory, it is believed that the presence of solidified fat provides structure to the emulsion, protecting the delicate air bubbles in the aqueous phase, whilst the presence of liquid fat enables the structure to move to accommodate the discrete aqueous phase regions as they are mixed in to the emulsion.

Percentages of gaseous components given herein are by volume, unless stated otherwise. Percentages of non-gaseous components are by mass, unless stated otherwise.

The invention will now be illustrated by the following examples, with reference to the accompanying Figure, which shows a micrograph of an aerated emulsion according to Reference Example 2.

### Example 1

A gelatin stock solution was prepared by dissolving 50 g of 160 bloom gelatin in 100 g of spring water at 80 °C with stirring. The solution was kept at 80 °C until needed.

An aqueous phase component was prepared as follows: spring water (116.7 g) and vanillin (0.2 g) were mixed in a saucepan, and sucrose (343.44 g) was added. The mixture was cooked to 72 °C with stirring to dissolve the sugar, adding water as necessary to maintain the weight of the mixture. 61.52 g of the gelatin stock solution was then added, together with glucose syrup 63DE (186.72 g) and inverted sugar syrup (91.69 g), and the mixture was mixed well, followed by cooling to 55 °C.

The aqueous phase component was then aerated in a Hobart planetary-action mixer fitted with a whipping head, until a density of between 0.3 and 0.4 g/cm³ was achieved. The aerated component was stored at room temperature in a closed container until required.

A fat phase component was prepared as follows: refined palm oil (25 g) and non-deodorised cocoa butter (40 g) were melted, and the emulsifiers polyglycerol polyricinoleate (PGPR, commercially available as Palsgaard 0450) (2.5 g) and distilled monoglycerides (commercially available as Palsgaard 0298) (5.0 g) were added. The mixture was heated to 60 °C and mixed thoroughly.

An emulsion was prepared as follows: the fat phase component prepared as above was placed in the bowl of a jacketed Hobart planetary-action mixer, with water from a bath at 18 °C running through the jacket. Separately, 266 g of the aerated aqueous phase component was weighed out and warmed to between 30 and 45 °C, until the texture had softened sufficiently to allow incorporation in the fat phase. A spoonful of the aerated aqueous phase component was then added to the fat phase component, and the mixer switched on at high speed until almost all the aqueous phase component was incorporated in the fat phase component. The mixer was then stopped, and a further spoonful of aqueous phase component was added, and the mixer restarted as before. This was continued until all of the aqueous phase component had been added.

The bowl edges were then scraped to ensure uniformity, and the mixer was set to a medium speed, and mixing continued. After 3 minutes, the mixture had cooled to 37 °C. After 5 minutes, the mixture had cooled to 29 °C, at which point the mixer was set to a low speed setting. After 8 minutes, the mixture had cooled to 26 °C. After 12 minutes, the mixture had cooled to 24.5 °C, and it was observed that the texture of the mixture became thicker. At this point, the mixer was stopped, the emulsion was given a final stir with a spoon, and was placed into sterile containers, or deposited directly into chocolate shells.

### Reference Example 2

A fat phase component was prepared as follows: DELIAIR™ 04 confectionery fat blend (available from AarhusKarlshamn AB, Jungmansgatan 12, SE-211 19 Malmö, Sweden) was melted. Emulsifiers polyglycerol polyricinoleate (PGPR, commercially available as Palsgaard 0450) (2.5 g) and distilled monoglycerides (commercially available as Palsgaard 0298) (2.5 g) were added, together with vanillin (0.1 g), vanilla flavouring (0.1 g) and chocolate flavourings (0.065 g). The mixture was heated to 55 °C and stirred well.

An aqueous phase component was prepared as follows: high maltose syrup (290.0 g) and glucose fructose syrup (124.75 g) were mixed and warmed to 35 °C.

An aerated emulsion was prepared as follows: the fat phase component was placed in the bowl of a jacketed Hobart planetary-action mixer fitted with a whipping head. The mixer was set to a medium speed setting, and the aqueous phase component added over a one-minute period. The edges of the bowl were repeatedly scraped to ensure uniformity. Mixing was continued for 2 minutes, until the temperature of the mixture had cooled to 28 °C. During this time, air was incorporated into the emulsion through the action of the mixer, resulting in a lighter('fluffy') texture with an appearance and consistency similar to that of a mousse. The density of the emulsion was reduced from 1.22 g/cm³ to 0.98 g/cm³. Icing sugar (20.0 g) was then added gradually. Once all of the icing sugar had been added, the mixer was stopped, and the bowl edges scraped once more.

Water from a water bath at 20 °C was then circulated through the jacket of the mixer, and mixing continued until the mixture had cooled to 21 °C and gained opacity (a total mixing time of 7 minutes). At this point, the mixer was stopped, the emulsion was given a final stir with a spoon, and was placed into sterile containers, or deposited directly into chocolate shells.

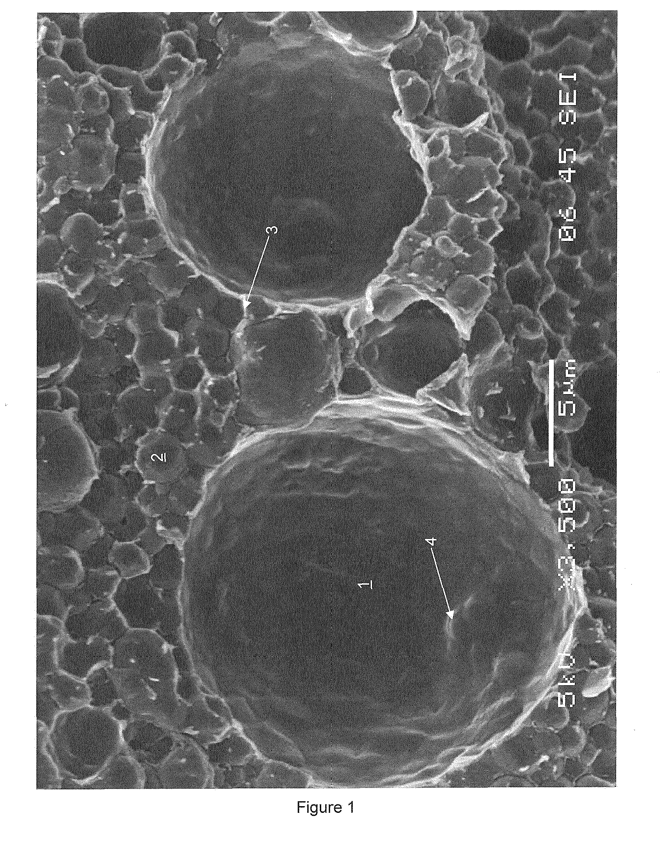

The structure of the resulting emulsion is shown in Figure 1. It can be seen that the aerated emulsion contains large pockets of gas (1) (of the order of 5-20 µm in diameter) surrounded by an emulsion of polyhedral aqueous phase droplets (2) (of the order of 1-2 µm in diameter) in a continuous fat phase (3), which takes the form of a thin film covering the droplets. The walls of the gas pockets are therefore formed by the emulsion as a whole; the imprint (4) of an aqueous phase droplet in the wall of a gas pocket can be clearly seen.

### Reference Example 3

The following example was prepared in a Giusti 50L jacketed mixer (available from T Giusti Ltd, Briggs House, Derby Street, Burton on Trent, Staffordshire DE14 2LH). The mixer is equipped with two large paddle mixers providing gentle mixing with scraping of the tank edges. An emulsifying head at the bottom of the tank provides high shear localised mixing.

A fat phase component was prepared as follows: refined palm oil (2.5 kg) and non-deodorised cocoa butter (3.5 kg) were melted and mixed together. Emulsifiers polyglycerol polyricinoleate (PGPR, commercially available as Palsgaard 0450) (0.25 kg) and distilled monoglycerides (commercially available as Palsgaard 0298) (0.25 kg) were added, together with vanillin (0.010 kg), vanilla flavouring (0.010 kg) and chocolate flavourings (6.5 g). The mixture was heated to 60 °C and stirred well.

An aqueous phase component was prepared as follows: high maltose glucose syrup (29.0 kg) and high fructose glucose syrup (12.5 kg) were mixed and warmed to 40 °C.

An emulsion was prepared as follows: the fat phase component was placed in the tank of the jacketed mixer. The mixer was set to the maximum speed setting, and the aqueous phase component added gradually in 6 kg portions through the opening in the lid of the tank. After each portion of aqueous phase component had been added, the emulsifier head was turned on for 15 seconds. After all of the aqueous phase component had been added, the emulsifier head was used at maximum speed for four bursts of 5 seconds each.

Water from a water bath at 20 °C was then circulated through the jacket of the mixer, cooling the mixture from 34 °C to 31 °C within 6 minutes. Cooling was then stopped, and non-alkalised cocoa powder (2.0 kg) was then added gradually with mixing. Cooling was then continued for approximately 15 minutes until the mixture had cooled to 25 °C. The emulsion was removed from the tank and stored at room temperature.

20 kg of the emulsion was transferred into the holding tank of an AMK50 temperer with the addition of an AFC50 aeration system (both devices available from Aasted-Mikrowerk ApS, of Bygmarken 9-17, DK-3520 Farum, Denmark), and reheated overnight to 28 °C. The emulsion was then aerated to reduce the density from 1.2 g/cm³ to 0.66 g/cm³, using N₂O. Key parameters of the tempering/aeration system are listed in Table 1:

**Table 1: Tempering/aeration parameters**

| | |
|---|---|
| Pump speed (L/h) | 7 |
| Mixer speed | 5.2 |
| Outlet aerated emulsion speed (L/h) | 12 |
| Pump temperature (°C) | 25.5 |
| Mixer temperature (°C) | 25.5 |
| Gas set point 2 (%) | 40 |
| Zone 3 (°C) | 26 |
| Zone 2 (°C) | 26.5 |
| Zone 1 (°C) | 26 |
| Reheating temperature (°C) | 26 |

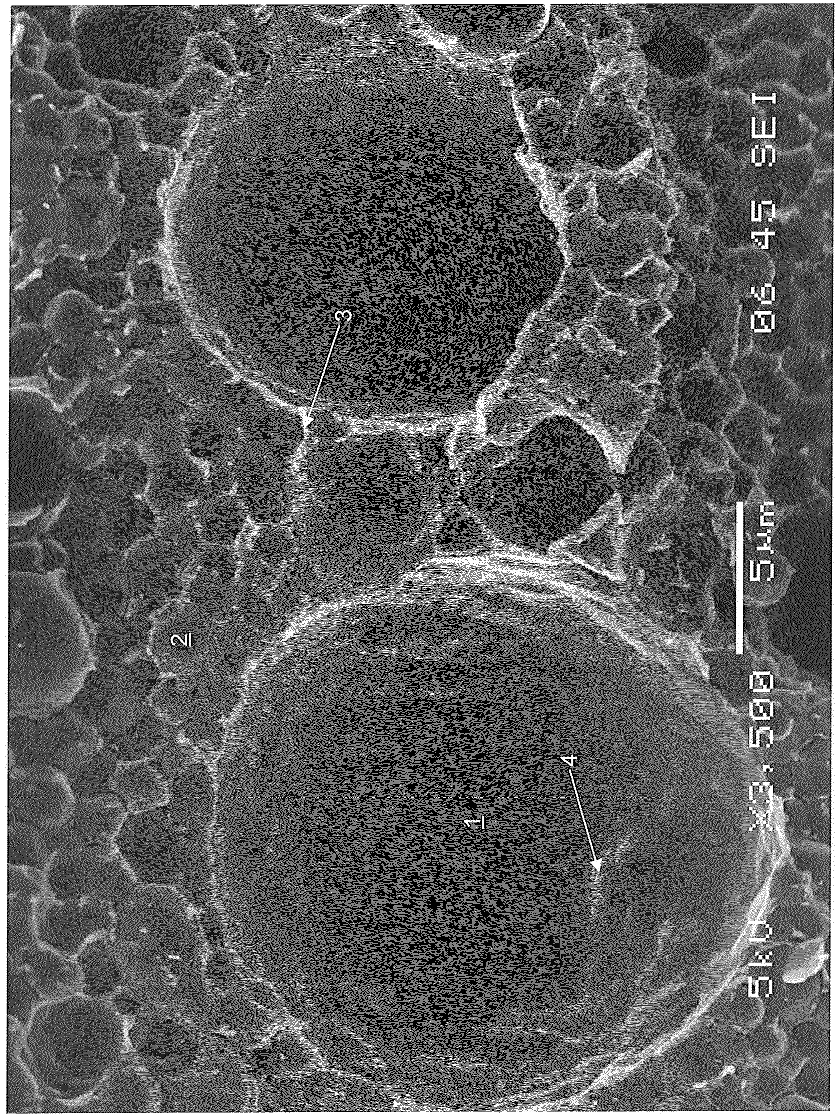

## Claims

1. An edible aerated water-in-oil emulsion comprising a fat phase; an emulsifier; and an aqueous phase, wherein the aqueous phase comprises entrapped gas and the entrapped gas forms at least 20% v/v of the aerated emulsion.

2. The aerated emulsion as claimed in claim 1, wherein the emulsion comprises at least 30% v/v entrapped gas, at least 40% v/v entrapped gas, or levels of greater than 50% v/v entrapped gas.

3. The aerated emulsion as claimed in claim 1 or 2, wherein the fat phase comprises a first fat having a first melting point, and a second fat having a second melting point lower than the first melting point.

4. The aerated emulsion as claimed in claim 3, wherein the first fat is a tempering fat, preferably cocoa butter.

5. The aerated emulsion as claimed in claim 4, wherein the tempering fat can exist in more than one crystal form and is present in the emulsion in substantially a single crystal form.

6. The aerated emulsion as claimed in any one of claims 3 to 5, wherein the second fat is a non-tempering fat, preferably palm oil.

7. The aerated emulsion as claimed in any one of claims 3 to 6, wherein the ratio of the first fat to the second fat is between 3:1 and 1:3.

8. The aerated emulsion as claimed in any preceding claim, wherein the emulsifier has an HLB value of less than 8.

9. The aerated emulsion as claimed in any preceding claim, wherein the fat phase forms less than 30% of the emulsion.

10. The aerated emulsion as claimed in any preceding claim, wherein the aqueous phase comprises a gelling agent.

11. The aerated emulsion as claimed in any preceding claim, further comprising a powdered component.

12. A confectionery composition comprising the aerated emulsion as claimed in any one of claims 1 to 11.

13. The confectionery composition as claimed in claim 12, wherein the aerated emulsion forms at least part of a filling, and the confectionery composition further comprises a shell or coating at least partially enclosing the filling.

14. A method for making an emulsion as claimed in any one of claims 1 to 11, comprising providing a first component for forming the fat phase of an emulsion; providing a second component for forming the aqueous phase of an emulsion; aerating the second component; and mixing the first component and aerated second component to form a water-in-oil emulsion.

15. The method as claimed in claim 14, wherein the first component comprises a first fat having a first melting point and a second fat having a second melting point; providing the first component comprises providing the first component at a temperature greater than the first melting point; and the method further comprises cooling the mixture of first and second components to a temperature less than the first melting point but greater than the second melting point, before completion of mixing the first and second components to form the emulsion.

16. The method as claimed in claim 14, further comprising aerating the water-in-oil emulsion, wherein aerating the water-in-oil emulsion optionally comprises whipping the water-in-oil emulsion and/or introducing gas into the emulsion under pressure, and reducing the pressure to cause gas bubbles trapped in the emulsion to expand.

17. The method as claimed in claim 16, wherein the first component comprises a first fat having a first melting point and a second fat having a second melting point; providing the first component comprises providing the first component at a temperature greater than the first melting point; and the method further comprises cooling the emulsion to a temperature less than the first melting point but greater than the second melting point, before completion of aeration of the emulsion.

18. The method as claimed in claim 16 or 17, further comprising the addition of a powdered component to the emulsion.

## Patentansprüche

1. Essbare, begaste Wasser-in-Öl-Emulsion, umfassend eine Fettphase, einen Emulgator und eine wässrige Phase, wobei die wässrige Phase eingeschlossenes Gas umfasst und das eingeschlossene Gas mindestens 20 Vol.-Vol.-% der begasten Emulsion bildet.

2. Begaste Emulsion nach Anspruch 1, wobei die Emulsion mindestens 30 Vol.-Vol.-% eingeschlossenes Gas, mindestens 40 Vol.-Vol.-% eingeschlossenes Gas oder Niveaus von mehr als 50 Vol.-Vol.-% eingeschlossenes Gas umfasst.

3. Begaste Emulsion nach Anspruch 1 oder 2, wobei die Fettphase ein erstes Fett, das einen ersten Schmelzpunkt aufweist, und ein zweites Fett umfasst, das einen zweiten Schmelzpunkt aufweist, der niedriger liegt als der erste Schmelzpunkt.

4. Begaste Emulsion nach Anspruch 3, wobei das erste Fett ein verdünnendes Fett, bevorzugt Kakaobutter, ist.

5. Begaste Emulsion nach Anspruch 4, wobei das verdünnende Fett in mehr als einer Kristallform existieren kann und in der Emulsion in im Wesentlichen einer einzigen Kristallform vorliegt.

6. Begaste Emulsion nach einem der Ansprüche 3 bis 5, wobei das zweite Fett ein nichtverdünnendes Fett, bevorzugt Palmöl ist.

7. Begaste Emulsion nach einem der Ansprüche 3 bis 6, wobei das Verhältnis des ersten Fetts zum zweiten Fett zwischen 3:1 und 1:3 liegt.

8. Begaste Emulsion nach einem der vorhergehenden Ansprüche, wobei der Emulgator einen HLB-Wert von weniger als 8 aufweist.

9. Begaste Emulsion nach einem der vorhergehenden Ansprüche, wobei die Fettphase weniger als 30 % der Emulsion bildet.

10. Begaste Emulsion nach einem der vorhergehenden Ansprüche, wobei die wässrige Phase ein Geliermittel umfasst.

11. Begaste Emulsion nach einem der vorhergehenden Ansprüche, des Weiteren eine pulverförmige Komponente umfassend.

12. Konfektzusammensetzung umfassend die begaste Emulsion nach einem der Ansprüche bis 1 bis 11.

13. Konfektzusammensetzung nach Anspruch 12, wobei die begaste Emulsion mindestens Teil einer Füllung ist und die Konfektzusammensetzung des Weiteren eine Umfüllung oder Beschichtung umfasst, die die Füllung mindestens teilweise einschließt.

14. Verfahren zum Herstellen einer Emulsion nach einem der Ansprüche 1 bis 11, umfassend das Bereitstellen einer ersten Komponente zum Bilden der Fettphase einer Emulsion; das Bereitstellen einer zweiten Komponente zum Bilden der wässrigen Phase einer Emulsion; das Begasen der zweiten Komponente; und das Mischen der ersten Komponente und der begasten zweiten Komponente unter Bildung einer Wasser-in-Öl-Emulsion.

15. Verfahren nach Anspruch 14, wobei die erste Komponente ein erstes Fett, das einen ersten Schmelzpunkt aufweist, und ein zweites Fett umfasst, das einen zweiten Schmelzpunkt aufweist; vorausgesetzt das Bereitstellen der ersten Komponente das Bereitstellen der ersten Komponente bei einer Temperatur umfasst, die höher als der erste Schmelzpunkt liegt; und das Verfahren des Weiteren das Kühlen der Mischung der ersten und zweiten Komponenten auf eine Temperatur, die geringer als der erste Schmelzpunkt, jedoch höher als der zweite Schmelzpunkt ist, vor Abschluss des Mischens der ersten und zweiten Komponenten, um die Emulsion zu bilden, umfasst.

16. Verfahren nach Anspruch 14, des Weiteren das Begasen der Wasser-in-Öl-Emulsion umfassend, wobei das Begasen der Wasser-in-Öl-Emulsion wahlweise das Schlagen der Wasser-in-Öl-Emulsion und/oder Einführen von Gas in die Emulsion unter Druck und das Reduzieren des Drucks, um Gasblasen, die in der Emulsion eingeschlossen sind, zum Expandieren zu bringen, umfasst.

17. Verfahren nach Anspruch 16, wobei die erste Komponente ein erstes Fett, das einen ersten Schmelzpunkt aufweist, und ein zweites Fett umfasst, das einen zweiten Schmelzpunkt aufweist; vorausgesetzt das Bereitstellen der ersten Komponente das Bereitstellen der ersten Komponente bei einer Temperatur umfasst, die höher als der erste Schmelzpunkt liegt; und das Verfahren des Weiteren das Kühlen der Emulsion auf eine Temperatur, die geringer als der erste Schmelzpunkt, jedoch höher als der zweite Schmelzpunkt ist, vor Abschluss des Begasens der Emulsion umfasst.

18. Verfahren nach Anspruch 16 oder 17, des Weiteren das Zusetzen einer pulverförmigen Komponente zu der Emulsion umfassend.

## Revendications

1. Émulsion comestible aérée eau-dans-huile comprenant une phase grasse; un agent émulsifiant; et une phase aqueuse, dans laquelle la phase aqueuse comprend du gaz piégé et le gaz piégé forme au moins 20 % en vol/vol de l'émulsion aérée.

2. Émulsion aérée telle que revendiquée selon la revendication 1, dans laquelle l'émulsion comprend au moins 30 % en vol/vol de gaz piégé, au moins 40 % en vol/vol de gaz piégé, ou des teneurs supérieures à 50 % en vol/vol de gaz piégé.

3. Émulsion aérée telle que revendiquée selon la revendication 1 ou 2, dans laquelle la phase grasse comprend une première matière grasse ayant un premier point de fusion, et une seconde matière grasse ayant un second point de fusion inférieur au premier point de fusion.

4. Émulsion aérée telle que revendiquée selon la revendication 3, dans laquelle la première matière grasse est une matière grasse de tempérage, de préférence du beurre de cacao.

5. Émulsion aérée telle que revendiquée selon la revendication 4, dans laquelle la matière grasse de tempérage peut exister sous plus qu'une forme cristalline et est présente dans l'émulsion substantiellement sous forme cristalline unique.

6. Émulsion aérée telle que revendiquée selon l'une quelconque des revendications 3 à 5, dans laquelle la seconde matière grasse est une matière grasse non de tempérage, de préférence de l'huile de palme.

7. Émulsion aérée telle que revendiquée selon l'une quelconque des revendications 3 à 6, dans laquelle le rapport de la première matière grasse à la seconde matière grasse est compris entre 3:1 et 1:3.

8. Émulsion aérée telle que revendiquée selon l'une quelconque des revendications précédentes, dans laquelle l'agent émulsifiant a une valeur HLB inférieure à 8.

9. Émulsion aérée telle que revendiquée selon l'une quelconque des revendications précédentes, dans laquelle la phase grasse forme moins de 30 % de l'émulsion.

10. Émulsion aérée telle que revendiquée selon l'une quelconque des revendications précédentes, dans laquelle la phase aqueuse comprend un agent gélifiant.

11. Émulsion aérée telle que revendiquée selon l'une quelconque des revendications précédentes, comprenant en outre un composant en poudre.

12. Composition pour confiserie comprenant l'émulsion aérée telle que revendiquée selon l'une quelconque des revendications 1 à 11.

13. Composition pour confiserie telle que revendiquée selon la revendication 12, dans laquelle l'émulsion aérée forme au moins une partie d'une garniture, et la composition pour confiserie comprend en outre une enveloppe ou un enrobage enfermant au moins partiellement la garniture.

14. Procédé de fabrication d'une émulsion telle que revendiquée selon l'une quelconque des revendications 1 à 11, comprenant la fourniture d'un premier composant pour former la phase grasse d'une émulsion; la fourniture d'un second composant pour former la phase aqueuse d'une émulsion; l'aération du second composant; et le mélange du premier composant et du second composant aéré pour former une émulsion eau-dans-huile.

15. Procédé tel que revendiqué selon la revendication 14, dans lequel le premier composant comprend une première matière grasse ayant un premier point de fusion et une seconde matière grasse ayant un second point de fusion; à condition que le premier composant comprenne la fourniture du premier composant à une température supérieure au premier point de fusion; et le procédé comprend en outre le refroidissement du mélange du premier et du second composants à une température inférieure au premier point de fusion mais supérieure au second point de fusion, avant l'achèvement du mélange du premier et du second composants pour former l'émulsion.

16. Procédé tel que revendiqué selon la revendication 14, comprenant en outre l'aération de l'émulsion eau-dans-huile, dans lequel l'aération de l'émulsion eau-dans-huile consiste éventuellement à battre l'émulsion eau-dans-huile et/ou à introduire du gaz dans l'émulsion sous pression, et à réduire la pression pour faire s'expanser les bulles de gaz piégées dans l'émulsion.

17. Procédé tel que revendiqué selon la revendication 16, dans lequel le premier composant comprend une première matière grasse ayant un premier point de fusion et une seconde matière grasse ayant un second point de fusion; à condition que le premier composant comprenne la fourniture du premier composant à une température supérieure au premier point de fusion; et le procédé comprend en outre le refroidissement de l'émulsion à une température inférieure au premier point de fusion mais supérieure au second point de fusion, avant l'achèvement de l'aération de l'émulsion.

18. Procédé tel que revendiqué selon la revendication 16 ou 17, comprenant en outre l'addition d'un composant pulvérulent à l'émulsion.
